# EUROPEAN PATENT APPLICATION

(11) **EP 1 748 670 A1**
(43) Date of publication of application: **31.01.2007**
(21) Application number: 06117799.4
(22) Date of filing: 25.07.2006
(51) Int. Cl.: H04Q 7/38

(54) **A mehod and a system for providing fix-line local numbers to mobile roaming subscribers**

(30) Priority: 25.07.2005 US 701979 P
(71) Applicant: Starhome GmbH, 8024 Zürich (CH)
(72) Inventor: Ophir, Shai, 40696, Moshav Ein-Vered (IL)
(74) Representative: Weydert, Robert

(57) **Abstract**

A unit, for example a visitor service node manages communication with roaming subscribers to cellular networks. The visitor service node is associated with a fixed line network and assigns a fixed-line number to a universal identification of the roaming subscriber. The unit further comprises a querying module, which responds to calls made to the fixed line network using the assigned fixed line number by recognizing that the number is assigned to a roaming cellular telephone and queries the home network of the roaming subscriber regarding its current roaming location. The query is used to locate the roamer who may be connected to any cellular network, and connect the call. As a result it is possible to provide a roaming user with a single local number which can be used irrespective of which cellular network he is currently roaming in.

## Description

### FIELD AND BACKGROUND OF THE INVENTION

The present invention relates to providing a local roaming number thereby to establish a telephony connection between a roaming mobile telephony device and a caller or callee without involving a connection via the home country and, more particularly but not exclusively, to establishing a local telephony connection between a roaming mobile handset device and a caller or a callee in the roaming country.

International roaming is one of the attractive features in mobile handset communications. The ability to roam enables mobile telephony subscribers to use services freely across different networks and different countries without changing numbers. The mobile telephony subscribers are preferably offered the same service capabilities in a visited network as in the home network.

Currently, most mobile handset operators provide roaming services by using the International Telecommunications Union-Telecommunication (ITU-T) signaling system known as Signaling System 7 (SS7). Most of the SS7 facilities belong to the international telephone operators who have SS7 compatible networks worldwide. The commonly used routing protocol used for providing the roaming service is called Signaling Connection Control Part (SCCP), which is a part of the SS7 standard.

Usually, when a roamer moves to any visited or roaming network, a location interrogation process is performed from the visited network to the home network via the SCCP gateway and the SS7 network. At the home network, the Home Location Register (HLR) database updates the current location of the aforementioned mobile handset during an interrogation request for authentication. The update is usually carried out by acquiring the roamer's profile from the Visitor Location Register (VLR) database in which it is stored. After an authorization has been acquired, the roamer can use the service in the visited network as if he were using the home network.

Each roaming mobile handset usually has a Mobile Station Integrated Services Digital Network (MSISDN) number that is used to identify a given subscriber. The number is based on the ITU-T E.164 and ITU-T E. 213 Standards, which are herein incorporated in their entirety by reference.

As described above, the roaming activity helps a subscriber to communicate in any country by using the roaming services. However, even if roaming is convenient for the user, the charges for making and receiving calls may be high, especially, when a caller is in a roaming country, since then he has to make an international call to his home country and be liable for International Direct Dialing (IDD) charges. Moreover, usually the caller is charged for IDD from his home country to the roaming country when receiving a call as well.

The latest developments in the roaming field permit more than one MSISDN number to be used for a single mobile handset. This configuration allows a subscriber to be registered in more that one network. Usually, the multiple numbers effect is achieved by attaching multiple MSISDNs or multiple IMSIs to the same SIM card. The user is provided with the ability to select one of the attached MSISDNs or IMSIs while roaming. In some developments the selection is done automatically. After a MSISDN or a IMSI has been chosen, the visited mobile network uses the chosen MSISDN or IMSI to locally connect the mobile handset. Such a configuration allows roaming subscribers to enjoy local tariffs and local services at cheaper rates. However, such a solution requires the cooperation of the visited networks and which provides the attached numbers, and the home network, which assigns them to the subscribers.

Although the aforementioned Multiple-MSISDN approach improves the subscriber's control during the roaming activity, it does not deal with some roaming issues. The subscriber can receive the service only if he is registered in a mobile visited network which provides the service. Another problem occurs when different mobile networks covers different regions in the visited country. When the roaming user roams from one region to another, transparently, he or she may arrive in a region in which the used MSISDN or IMSI is not supported by the visited networks that cover the visited region.

There is thus a widely recognized need for, and it would be highly advantageous to have, a system and a method for providing mobile roamers with a local number which can be used regardless to the mobile network which is currently used.

### SUMMARY OF THE INVENTION

According to one aspect of the present invention there is provided a visitor service node for managing communication with roaming subscribers. The gateway comprises a connection for receiving calls with fixed line numbers from a fixed line network, a matching module for bringing about a match between a fixed-line number preassigned to a roaming subscriber and a universal identification of the roaming subscriber, a querying module, associated with the matching module, configured for querying the home network of the roaming subscriber to determine a current roaming location thereof, and
a routing module configured for routing a call designating the fixed-line number to the roaming subscriber according to the current roaming location.

Preferably, the matching module further comprising a roaming subscriber repository having a plurality of fixed-line numbers associated with a plurality of universal identifications, the matching module being configured for querying according to a match between one of the plurality of fixed line numbers and one of the plurality of universal identification.

Preferably, the origin network uses one member of the group consisting of a home location register (HLR) device and a home subscriber server (HSS) for answering the querying.

More preferably, the HLR is configured to identify a remotely located mobile switching center (MSC) that hosts the roaming subscriber.

More preferably, the HSS is configured to identify a remotely IP location that assigned to the roaming subscriber by the roaming network.

More preferably, the current roaming address comprises the remotely located MSC.

Preferably, the current roaming address comprises a mobile station roaming number (MSRN).

Preferably, the call is a voice over IP (VoIP) call.

More preferably, the visitor service node is coupled with a user interface, the user interface being adapted to allow a system operator to configure the plurality of roaming subscriber identification.

More preferably, the home network is coupled with a user interface module, the user interface module being adapted to allow a system operator to configure the plurality of roaming subscriber identification.

Preferably, the call is a member of the group consisting of: a local call, a demand for establishing a connection, a Short Message Service (SMS) transmission, a Multimedia Messaging Service (MMS) transmission, and a General Packet Radio Service (GPRS) session.

Preferably, the visitor service nodes is configured to be connected to a call session control function (CSCF) module.

Preferably, the origin network comprises an Internet protocol (IP) Multimedia Subsystem (IMS).

More preferably, the matching module is configured for assigning a first identification address to a second identification address associated with one of the roaming subscribers, the routing module configured for routing a call designating the first identification address to the roaming subscriber according to the current roaming address.

More preferably, the origin network uses a home subscriber server (HSS) for answering the querying.

More preferably, the first and second identification addresses comprises an Internet protocol (IP) address.

More preferably, the call is established on a connection which is a member of the group consisting of: a telephony connection and an IP connection.

More preferably, the roaming subscriber is connected to the IMS based network using user equipment (UE), the UE being a member of the group consisting of: a landline handset, a cellular handset, a PDA (personal digital assistant), a laptop, and a desktop computer.

Preferably, the visitor service node is configured to establish a local connection with a roaming subscriber by:
receiving a call with a certain fixed line number preassigned to the roaming subscriber from the fixed line network via the connection,
using the matching module for bringing about a match between the certain fixed-line number and a universal identification of the roaming subscriber,
using the querying module for instructing the home network of the roaming subscriber to locate a mobile network component currently hosting the roaming subscriber, and
using the routing module for routing the call to the roaming subscriber according to the mobile network component.

Preferably, the mobile network component is a mobile switching center.

According to one aspect of the present invention there is provided a method for managing communication with roaming subscribers. The method comprises a) associating a universal identification of the roaming subscriber with a fixed-line number, b) receiving a call designating the fixed-line number, c) querying the origin network of the roaming subscriber regarding its current roaming address using the universal identification, and d) routing the call using the current roaming address.

Preferably, the further comprising a step before step a) of associating a plurality of universal identifications with a plurality of fixed-line numbers, wherein the querying is done using one of the plurality of universal identifications, the call designating an associated fixed-line number of the plurality of fixed-line numbers.

Preferably, the current roaming address comprises the mobile station roaming number (MSRN) of the mobile handset device of the roaming subscriber.

Preferably, the querying is done by using a mobile switching center associated with a remotely located service node for sending a location interrogation signal to a mobile switching center which is hosting the roaming subscriber for acquiring the current roaming address.

Preferably, the call is one member of the group consisting of: a local call, a demand for establishing a call, a Short Message Service (SMS) transmission, a Multimedia Messaging Service (MMS) transmission, and a General Packet Radio Service (GPRS) session.

Preferably, the querying is done by using a CSCF associated with the origin network for querying an HSS of a mobile handset network hosting the roaming subscriber regarding a routing address associated with the roaming subscriber.

Preferably, the querying is performed according to match between the fixed-line number and one of a plurality of Mobile Station Integrated Services Digital Network (MSISDN) numbers.

Preferably, the call is a voice over IP (VoIP) call.

According to another aspect of the present invention there is provided a unit for locating roaming cellular subscribers. The unit comprises an input unit configured to be connected to a fixed line network, and to receive a demand to set up a telephony connection with a roaming cellular subscriber according to a fixed-line number, the demand being received from a switch of the fixed line network, and a locating module, associated with the input unit, configured for locating a cellular network that hosts the roaming subscriber if the demand does not specify which cellular network.

According to another aspect of the present invention there is provided a unit for augmenting a fixed line network. The unit comprises an assigning module for assigning a fixed-line number of the fixed line network to a roaming cellular subscriber, and a spotting module for locating a cellular network currently hosting the roaming cellular subscriber, thereby to allow forwarding of calls to the currently hosting cellular network.

According to another aspect of the present invention there is provided a unit for facilitating the use of an alias for locating a cellular device. The unit comprises an assigning module for assigning a number provided by a fixed line network as the alias to the cellular device, and a spotting module configured to receive the alias from the fixed line network, therewith to issue a query from which to identify a cellular network currently hosting the cellular device.

Preferably, the query is issued to a home network to which the cellular device is subscribed.

According to another aspect of the present invention there is provided a unit for augmenting a fixed line network. The unit comprises a batch assigning module for assigning at least one batch of local fixed line numbers to at least one foreign network, a number assigning module for assigning each one of the batch of local fixed line numbers of a respective foreign network as an alias for a roaming user of the respective foreign network, and a spotting module configured to recognize the alias as a roaming user and to locate a mobile network currently hosting the roaming user.

Unless otherwise defined, all technical and scientific terms used herein have the same meaning as commonly understood by one of ordinary skill in the art to which this invention belongs. The materials, methods, and examples provided herein are illustrative only and are not intended to be limiting.

Implementation of the method and system of the present invention involves performing or completing certain selected tasks or steps manually, automatically, or a combination thereof. Moreover, according to actual instrumentation and equipment of preferred embodiments of the method and system of the present invention, several selected steps could be implemented by hardware or by software on any operating system of any firmware or a combination thereof. For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

### BRIEF DESCRIPTION OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1, is a schematic illustration of a visitor service node for managing communication with roaming subscribers, according to a preferred embodiment of the present invention;
Fig. 2 is a schematic illustration of a system for establishing a connection with a roaming subscriber in a certain VPLMN using a local fixed-line network, according to a preferred embodiment of the present invention;
Fig. 3 is a simplified sequence chart that depicts a message exchange sequence of a location interrogation process, according to one embodiment of the present invention;
Fig. 4 is a simplified flowchart of an exemplary method for establishing a local connection between a caller and a roaming subscriber, according to a preferred embodiment of the present invention;
Fig. 5 is a schematic illustration of a system for establishing a connection between a caller and a roaming subscriber using IMSs of the networks, according to a preferred embodiment of the present invention; and
Fig. 6 is simplified sequence chart that depicts a message exchange sequence of a location interrogation process which is done using IMS entities, according to one embodiment of the present invention.

### DESCRIPTION OF THE PREFERRED EMBODIMENTS

The present embodiments comprise a system and a method for allocating a fixed-line roaming number for a mobile handset roaming subscriber.

The principles and operation of a system and method according to the present invention may be better understood with reference to the drawings and accompanying description.

Before explaining at least one embodiment of the invention in detail, it is to be understood that the invention is not limited in its application to the details of construction and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

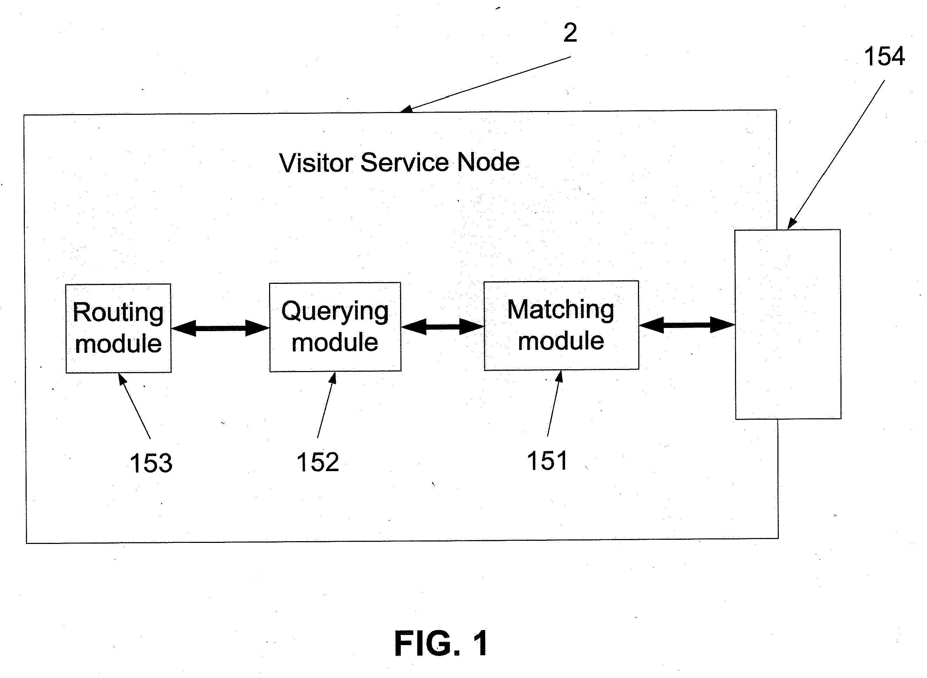

Reference is now made to Fig. 1, which is a schematic illustration of a visitor service node 2 for managing communication with roaming subscribers, according to the known art.

The visitor service node 2 may comprise a database, which may contain replicated data of a central database cached in a management center coupled to global packet switch network (not shown). Database may contain translation tables, subscriber profile data and roaming patterns as explained in the European Patent No. 1111945. The visitor service node 2 comprises a connection 154 for receiving calls from a communication network. The connection 154 is connected to a matching module 151 for receiving SS7 signaling that includes a universal identification of a roaming subscriber from the connection. The communication network may route to visitor service node 2 all the calls dialed by roamers. The visitor service node 2 may use the matching module 151 to translate a local number into a roaming destination number according to information stored in database, as described below. This specific roaming destination number may be a full destination number or any other dialing sequence.

The visitor service node 2 further comprises a querying module 152, which is associated with the matching module 151. The querying module 152 is configured for querying the home network of the roaming subscriber, which is preferably a home public land mobile network (HPLMN), regarding roaming information and approvals. The visitor service node 2 further comprises a routing module 153 which is configured for routing a call designating to the roaming subscriber according to its current roaming address. The visitor service node 2 is connected via a global packet switch network to a mobile network.

Similar configurations have previously been described, in PCT publication WO 99/57914, published Nov. 11, 1999. When a user subscribing to a home mobile network roams in a visited mobile network, the service nodes communicate the signaling necessary for call control and for services via the global packet switch network. This communication is used to manage both mobile originated (MO) calls and mobile terminated (MT) calls in real time. This communication is also used to offer advanced services such as home-language announcements and prepaid recharging.

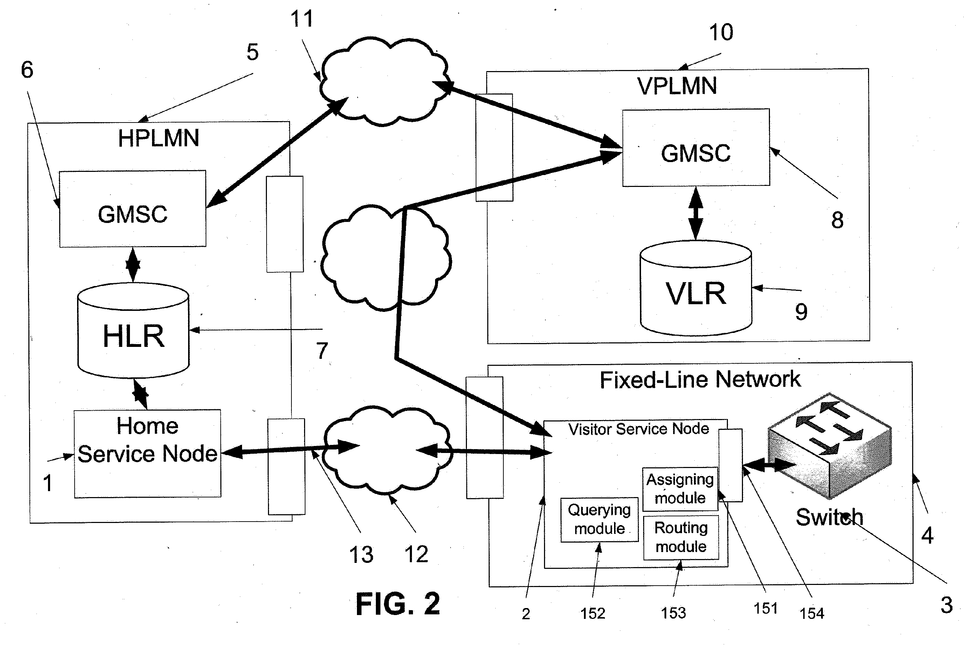

Reference is now made to Fig. 2, which is a schematic illustration of a system for establishing a telephony connection with roaming subscribers in a certain VPLMN 10 using fixed-line network 4, according to a preferred embodiment of the present invention. The visitor service node 2 is substantially as in Fig. 1, however in the embodiment which is depicted in Fig. 2 it is connected to a fixed line network 4 for example via switch 3. The visitor service node 2 is configured for allowing the establishment of a local call using a fixed-line network number. In order to allow the establishment of such a local call, the connection 154 of the visitor service node 2 is configured for receiving calls with fixed line network numbers from a fixed line network.

In one embodiment of the present invention the matching module 151 is configured for facilitating the assignment of a fixed-line number of a local fixed line network (fixed-line network) to a roaming subscriber. Preferably, the matching module 151 comprises a matching table that allows it to match between the phone numbers of the allocated fixed-line network numbers and the MSISDNs or other identification numbers or marks which are associated with roaming subscribers. The original MSISDNs are preferably used in the querying module 152, as further described below.. The querying module 152 is configured for querying the origin network of the roaming subscriber, which is preferably a home public land mobile network (HPLMN), regarding its current roaming address. The querying module 152 uses the received original MSISDNs in order to allow the HPLMN of the related roaming subscriber to identify the roaming subscribers. The routing module 153 is configured for routing a call designating the fixed-line number to the roaming subscriber according to the current roaming address. The routing is preferably done by connecting the received call to the visited public land mobile network (VPLMN) that currently hosts the roaming subscriber. A more detailed description of the routing is included below.

In another preferred embodiment of the present invention, the querying module 152 uses fixed line network number which is received via the connection 154 is identified in order to allow the HPLMN of the related roaming subscriber to identify the roaming subscribers. In such an embodiment, the home service nodes comprises a matching table that allows it to match between the phone numbers of the allocated fixed-line network numbers and the MSISDNs or other identification numbers or marks which are associated with roaming subscribers. The identification numbers may be a full destination number, a different short code, or any other sequence of letters of numbers.

The home service node receives the fixed line network number and uses the matching table to identify the associated roaming subscribers

Fig. 2 depicts a HPLMN 5, which is connected to a VPLMN 10 and to fixed line network (fixed-line network) 4. The connection between the HPLMN and fixed-line network 13 is established using service nodes 1, 2 which are preferably connected via a regular IP connection

Both the HPLMN and VPLMN comprise gateway mobile switching centers (GMSCs) 6, 8. The GMSCs 6, 8 are configured to provide edge functions within the HPLMN 5 and VPLMN 10, respectively. The networks are connected to the local public switched telephone network (PSTN) and are configured to convert signaling which is received from the PSTN according to traffic formats and protocols which are employed in mobile handset networks. For example, each one of the GMSCs 6, 8 is configured to route telephone calls according to its MSRNs to various related MSCs. The GMSCs 6, 8 are also configured to interact with the HLR 7 and the VLR 9, respectively, to obtain routing information, as will be described in detail hereinbelow. It should be noted that the GMSCs 6, 8 and the HLR 7 and VLR 9 do not need to reside on the same switch, as they are considered to be two different nodes in the global system for mobile communications (GSM) specification.

Unlike the voice path, which is typically sent over E1/T1 trunks, signaling related to a particular call is extracted by the Service nodes and sent via a regular IP connection. An international carrier network 11 connects HPLMN 5 and VPLMN 10, enabling signaling therebetween.
The architecture of the system which is depicted in Fig. 2 and described hereinabove, in particular which includes an service node connected to the fixed-line network allows callers to use a fixed line number to establish a local call with a subscriber of the HPLMN 5 that is roaming at VPLMN 10. By utilizing the system, callers can use the same fixed-line network number in order to establish a call with a roaming subscriber, regardless of the cellular network that is currently hosting him. The roaming subscriber does not need to be connected to a certain cellular network in order to be reached using the same fixed-line network number. The fixed line network 4 reserves a range of local telephone numbers which it then allocates to roaming users preferably indirectly through the respective home networks or directly to roaming users as they are discovered. The switch 3 is configured to route calls to any of the allocated numbers to the visitor service node 2.

Such an embodiment allows the fixed-line network operator to allocate a range of numbers to each home network. The allocated numbers are used for their roaming traffic, as further described below. The allocated numbers are then assigned by the home network to roaming subscribers as they arrive in the fixed-line network region. In one embodiment of the present invention, the home service node 1 notifies the visitor service node 2 of a new roamer, and asks the visitor service node 2 to assign a fixed-line network number to it. The visitor service node 2 assigns such a fixed-line network number, and notifies the roaming subscriber via an SMS regarding the assigned fixed-line network number. In another embodiment, that fixed-line network numbers are assigned by the home network, after coordinating with the fix-line network operator. In such an embodiment, the home network operator receives fix-line network numbers from the fix-line network operator and updates a local matching table which is used for identifying the associated roaming subscriber, as described above.

In general, when calls are made to the fix-line network, the visitor service node 2 receives the call from the switch 3. As commonly known, fixed-line network switches are usually connected to fixed destinations, and establish a call with the fixed destination, such as a telephone subscriber end point, when a demand to set up a local connection that designates it by a related fixed line number is received. In the present embodiment, the switch 3 associates all the fixed-line network numbers which are allocated for the roaming service to its visitor service node 2 as if it was a fixed destination. The visitor service node 2 thus receives the call as if it is a fixed destination but then needs to determine where it is to forward the call. Generally, fixed line networks do not know how to track mobile telephony devices so the gateway 2 needs to look outside the network to determine the destination. Hence the gateway 2 uses its querying module for inquiring of the home network of the roaming subscriber regarding its current roaming address. As described above, the visitor service node 2 does so via packet switched network 12 and no International telephony connection is made. The query procedure will be described in greater detail below, and results in the visitor service node receiving a current roaming number MSRN. Using the current roaming location, the routing module of the visitor service node 2 can route calls directly to the roaming subscriber. A more detailed description of the routing and querying process is now given below.

Preferably, the visitor service node 2 comprises an interface that can be used to input monitoring instructions that assign MSISDN numbers to local telephone numbers.

In one embodiment of the present invention, the visitor service node 2 is connected to a pooling system. The pooling system is configured for ensuring a controlled distribution of the numbers which are assigned to the roaming users of a preferred network. The pooling system is used to ensure that different users are assigned with different fixed-line network numbers. Preferably, the pooling system is configured for assigning fixed-line network numbers according to the frequency a certain user roams to the region of the fixed-line network that hosts the visitor service node 2. Such a pooling system allows the assignment of a fixed fixed-line network number to a frequent roaming user. Preferably, the pooling system is configured to assign fixed-line network numbers to roaming user according to predefined periods or airtime credit.

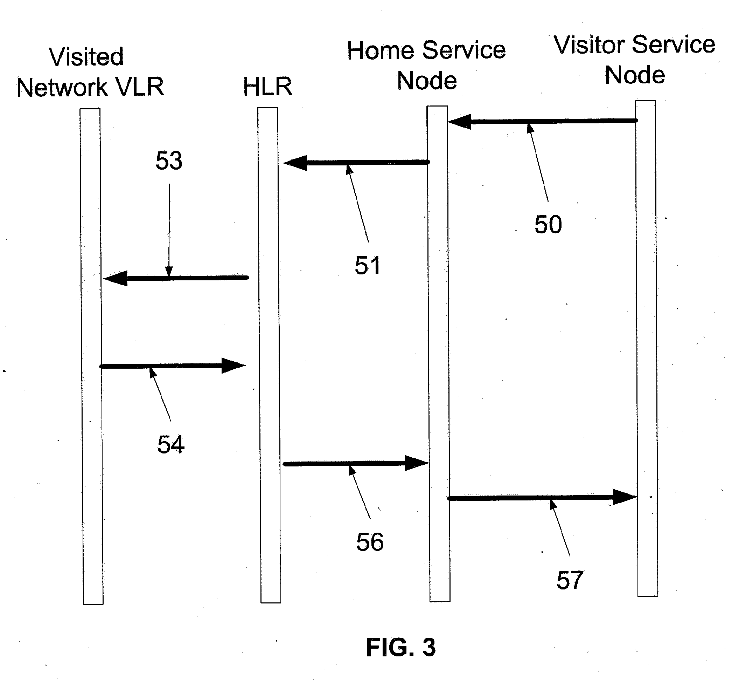

Reference is now made to Fig. 3, which is a sequence chart that depicts a message exchange sequence of a location interrogation process, according to one embodiment of the present invention. After a call is received from the fixed-line network, as described above, the visitor service node may establish a connection with a home service node in the HPLMN (Numeral 12, Fig. 2). The established connection is preferably an IP connection over a TCP (transmission control protocol)/IP network 12. In the first step, as shown at 50, the home service node is configured to receive call control information from the visitor service node via the connection. The call control information may be in the form of frames, packets, or any other unit of data which is sent across a network.

Reference is now made, once again, to Fig. 2. In one embodiment of the present invention, the home service node 2 is configured to instruct the GMSC 6 to query the HLR 7 to obtain routing information, such as the proper destination MSC and proper destination VLR for a certain roaming subscriber. As described above, the HLR 7 is configured to request the current MSRN of a certain subscriber according to its MSISDN. The MSRN is an E.164 defined telephone number that represents the target MSC and target VLR to which the associated subscriber is currently connected. Preferably, the home service node 1 is configured to receive an MSISDN from the visitor service node 2 or to use a local matching table to identify it and, accordingly, to send a query to the HLR 7 in order to instruct it to query the received MSISDN with the target MSC and the target VLR which are currently connected to the subscriber. It should be noted that the home and visitor service nodes may be intelligent gateways which have been adjusted to interconnect between the HPLMN and the VPLMN, as described above.

The home service node 1 and the target VPLMN that comprises the target MSC and the target VLR are preferably connected to SS7 MAP links. The SS7 MAP links between the HPLMN and VPLMN mobile networks (not shown) using an SS7 probe (not shown). Each of US Patent Publication No. 2005/0186939 assigned to Starhome GmbH and US Patent Application Publication No. 2003/072425 assigned to Agilent Technologies, Inc. herein incorporated in their entirety by reference, discloses such a probe. The probe works together with a database and an associated data aggregation application, which arranges signaling data per roaming telephone, in order to produce a record that indicates how a particular telephone is used when roaming. As well as signaling, call data records (CDRs), may be available. Call data records are records of individual telephone calls or connections. The application includes a database, logic to add records to the database and additional logic to utilize the data from the database, as explained in the aforementioned U.S. Patent Application No. 2005/0186939.

Reference is now made, once again, to Fig. 3. As described above, the visitor service node transmits an MSISDN number to the home service node. Then, as shown at 51, the home service node is able to derive the destination MSISDN address from the message received from the visitor service node to the HLR from the destination MSISDN. It should be noted that other identification marks which are associated with roaming subscribers may be forwarded. As shown at 52, The HLR sends a request to the current VLR of the VPLMN, giving the IMSI of the subscriber and the current MSC. The VLR has allocated an MSRN from its assigned pool, and maps the IMSI to the MSRN. A response, with the allocated MSRN, is sent back to the HLR, as shown at 54. In the following step, as shown at 56, the HLR forwards the new MSRN to the home service node.

Reference is now made, once again, to Fig. 2. Preferably, the connection 13 between the service nodes 1, 2 is bidirectional. Accordingly, the home service node 1 is further configured to transmit call control data via the connection 13 to the visitor service node 2, and thereby returns to the Visitor Service node 2 the MSRN which it retrieved from the VLR as above. The visitor service node 2 is configured to receive call control data from the home service node 1 via the connection 13 and to instruct the GMSC of the VPLMN 10 accordingly, as described below. The Visitor Service node 2 can therefore use the MSRN as a destination to route the call to the destination mobile handset.

This configuration of the system allows the establishment of local calls between callers using the local fixed line number and roaming subscribers currently connected via a local VPLMN 10. It should be noted that a connection or a demand to set up a connection may be related to local or even International calls, Short Message Service (SMS) transmissions, Multimedia Messaging Service (MMS) transmissions, General Packet Radio Service (GPRS) sessions, etc.

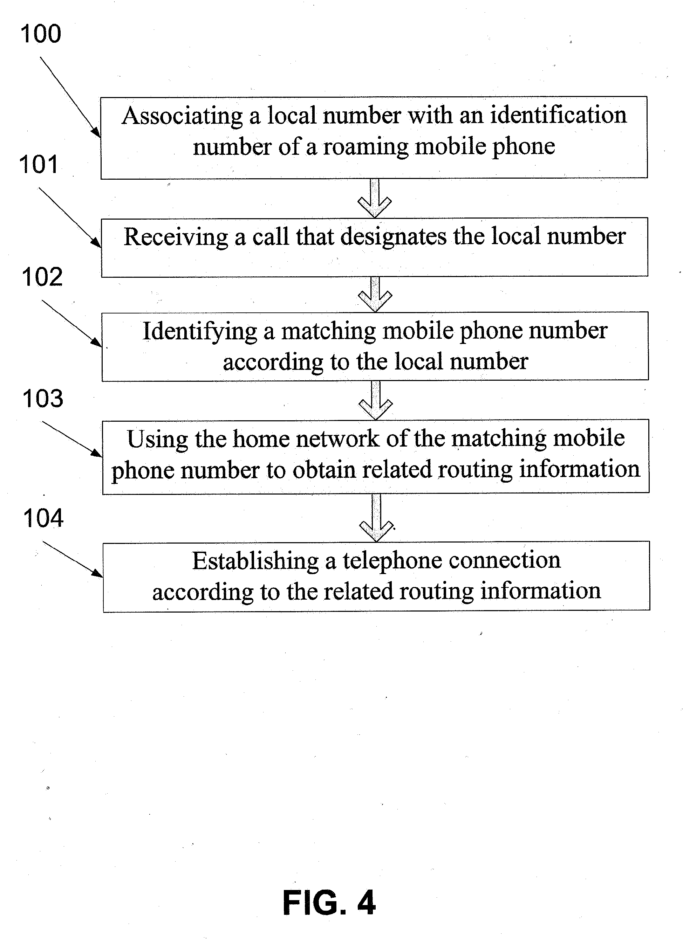

Reference is now made to Fig. 4, which is a flowchart of an exemplary method for establishing a local telephony connection between a caller and a roaming subscriber, according to a preferred embodiment of the present invention.

During the first step, as shown at 100, a local target address such as an assigned fixed line number, is associated with an identification number of a roaming mobile handset. Preferably, as described above, the matching table of the visitor service node or the home service node is updated with MSISDN numbers of roaming subscribers. Preferably, each MSISDN is associated with such a local fixed line telephone number.

In the following step, as shown at 101, a demand to set up a local connection such as a local call that designates one of the allocated local numbers is received. The allocated local number is a fixed line number so the call is routed to the fixed line network. The switch of the fixed line network recognizes the number as one of the numbers allocated to a foreign service provider as explained above, and therefore the local switch routes the received call to the visitor service node, which impersonates an HLR for the number.
Then, as shown at 102, according to the local number which is used by a certain caller, a matching mobile handset number or MSISDN is identified using one of the aforementioned matching tables.

In the following step, as shown at 103, entities of the home network of the matching mobile handset number are used in order to obtain related routing information. This step is used for querying the origin network of the roaming subscriber regarding its current roaming address using the matched universal identification. As described above, the visitor service node has been used in the previous steps for acquiring the MSISDN or equivalent identification information of the target mobile handset. Preferably, the visitor service node transmits a request that comprises the aforementioned acquired information to the home service node of the HPLMN of the targeted roaming subscriber. The request is for the current MSRN of the roaming subscriber that is related to the acquired MSISDN. However the MSRN is only known at the VLR actually serving the roaming telephony device, and only the HLR knows the identity of the VLR. The home service node, as described above, thus initiates a location interrogation in which the received MSISDN is forwarded to the home HLR. The HLR contacts the VLR of the VPLMN to which the roaming subscriber is currently connected. As further described above, the current MSRN of the roaming subscriber is transmitted in response from the VPLMN to the of the HPLMN in reply to the received MSISDN. The MSRN is routed to the home service node that further transmits it to the requesting visitor service node via a predefined connection, as described above.

In the following step, as shown at 104, the received demand is forwarded according to related routing information. Accordingly, a telephone connection is established between the caller and the destination, without having to route the call via the home network.

Once the MSRN is known then call setup is carried out in the conventional manner.

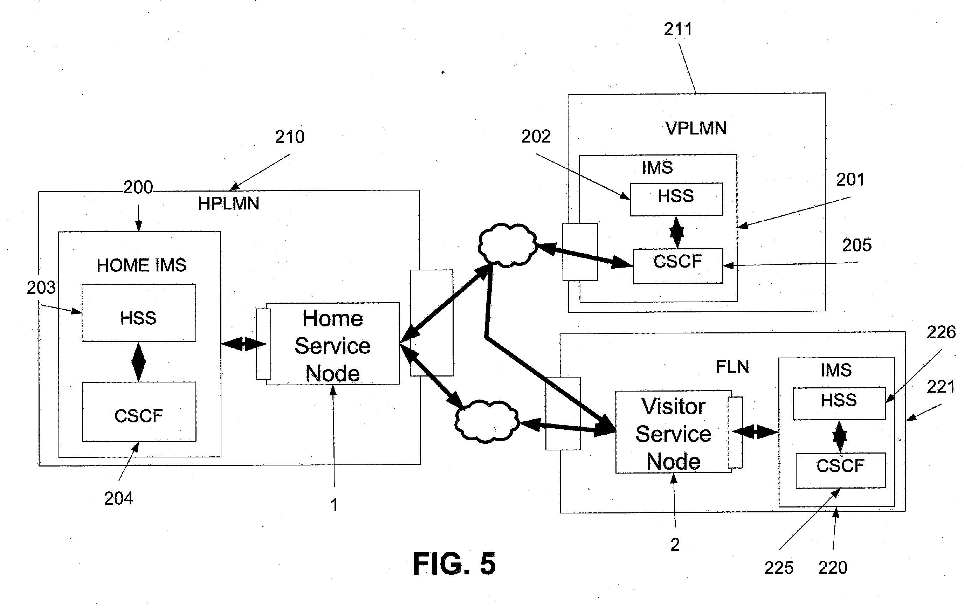

Reference is now made to Fig. 5, which is a schematic illustration of a system for establishing a local connection according to an alternative embodiment of the present invention. The connection is established between User Equipment (UE), which is connected to a fixed line network 221 and a subscriber of a home network (HPLMN) 210, which is roaming in another mobile network (VPLMN) 211, according to a preferred embodiment of the present invention. The UE may be understood as a landline handset, a cellular handset, a PDA (personal digital assistant), a laptop, a desktop computer, etc. As described below, the connection is established using an IMS of one of the networks.

Generally, the IMS is part of the 3GPP communication systems of the UMTS wireless network. The IMS allows the introduction of Internet protocol (IP) multimedia services for the UMTS and code division multiple access (CDMA) third generation (3G) system. The IMS is comprised of a set of IP-connected network entities within the IMS using packet-switched services. These network entities provide IP multimedia features and services using the session initiation protocol (SIP) for call control.

As commonly known, an IMS network is an IP multimedia and telephony core network. It is defined by 3GPP and 3GPP2 standards and organizations based on Internet Engineering Task Force (IETF) Internet protocols. The IMS supports an IP to IP session over wireline IP, 802.11, 802.15, CDMA, packet data along with GSM/EDGE (enhanced data rates for GSM evolution)/UMTS and other packet data applications. Each IMS network preferably consists of session control, connection control and an applications services framework along with subscriber and services data.

Each IMS 200, 201, 220 includes logical elements, each of which may be defined by network functions that have been grouped together. Actual implementation may contain multiple copies of these logical elements within multiple networks, and can merge any of these logical elements into single hardware entities.

Moreover, it should be noted that the architecture of the present invention is designed to utilize emerging Internet standards and protocols. An example of this is the use of SIP for IMS signaling for establishing a call. Use of Internet-based protocols allows the IMS to provide Internet-like functionality and services to mobile units along with voice and data services.

The IMSs 200, 201, 220 have logical elements which are the home subscriber servers (HSSs) 203, 202, 226, respectively. The HSSs are master user databases that support the IMS entities that are actually handling the calls/sessions. Each one of the depicted HSSs 202, 203, 226 preferably provides one or more of the following functions: providing support for subscriber authentication, managing subscriber profile, providing service authorization, providing subscriber location management, providing intersystem handover, and call routing. Each of the HSSs 202, 203, 226 provides these functions for users who receive services from related networks 211, 210, 221, respectively. The HSS records include user identity, allocated Serving CSCF (call session control function) name, allocated Proxy CSCF name, roaming profile, authentication parameters and service information. The HSS also provides the HLR and Authentication Center (AUC) functions.

Each one of the IMSs 200, 201, 220 further comprises a call session control function (CSCF) module 204, 205, 225, respectively, which is a signaling entity for call/session control. The CSCF modules 204, 205, 225 manage SIP sessions, provide features and services, and coordinate with other network elements for session control and resource allocation.

Preferably, each one of the CSCF modules 204, 205, 225 is split into three parts:
1. Proxy CSCF (P-CSCF): This is a CSCF proxy and is the primary contact between the UE (user equipment) of the caller and the IMS home network. When UE is connected to the network, its terminal is conncted to a P-CSCF. The assignment is maintained throughout the communication between the UE and the network. All control and signaling messages pass through it, and it authenticates the user and generates charging information to be disseminated at a charging collection node.
2. Interrogating CSCF (I-CSCF): The I-CSCF is the interrogating node which is used for routing IMS sessions to the appropriate IMS network.
3. Serving CSCF (S-CSCF): The S-CSCF is the central node used for signaling in the home network. It interfaces with the HSS to read and write user data. It is the SIP registrar, which binds the UE location or IP address to a SIP address. It is also the entity that decides which Application Server will be contacted for a given communication query.

Generally, when UE initiates a session via a certain P-CSCF, the P-CSCF forwards SIP messages received from the UE to the related I-CSCF, S-CSCF, or both, depending on the type of message and procedure. The I-CSCF provides a contact point within an operator's network allowing subscribers of that network operator, and roaming subscribers, to register. Once registered, the S-CSCF maintains the session state for all IMS services.

In one embodiment of the present invention, as described above, callers can establish a local connection with roaming subscribers of another network by calling a local number. For example, in Fig. 5, certain UE, which calls a certain number of the visitor fixed-line network 221, can establish a local connection with a subscriber of the HPLMN 210 when roaming to a related VPLMN 211. Similarly to the procedures described above, the local connection is established using the visitor service node 2, and the current roaming address of the subscriber of the HPLMN is overtaken using the home service node 1

Reference is now made, once again, to Fig. 4. During step 100, a local number is associated with an identification number of a roaming mobile handset, as noted above. Preferably, a matching table in the visitor service node 2 or in the home service node 2 is updated with the addresses of roaming subscribers. Preferably, each address is associated with a local address.

In the following step, as shown at 101, a local call that designates one of the allocated local addresses is received from a caller, as noted above. Preferably, a local switch routes the received call to the IMS sub-system of the fixed line network. Then, the P-CSCF or another component of the IMS sub-system forwards the received call to the visitor service node which is associated with the local number. Preferably only the IP signaling is forwarded.

It should be noted that in this embodiment the voice is not routed, as it waits at the VoIP gateway of the IMS network. Only the IP signaling is forwarded. The voice is routed at the end of the procedure, after identifying the call's destination.

In the following step, as shown at 102, a matching mobile handset number is identified according to the local number which is used by the caller, as noted above.

In the following step, as shown at 103, the home service node of the home network of the matching mobile handset number is used in order to obtain a related routing profile. The related routing profile preferably comprises the local IP address that represents the roaming subscriber, in the visited IMS network.

Preferably, the visitor service node that has been used in the previous steps for acquiring the number of the roaming subscriber transmits a request that comprises the acquired number to the home service node of the home network of the targeted roaming subscriber. The request is for the current roaming profile of the roaming subscriber which is related to the acquired UE number.

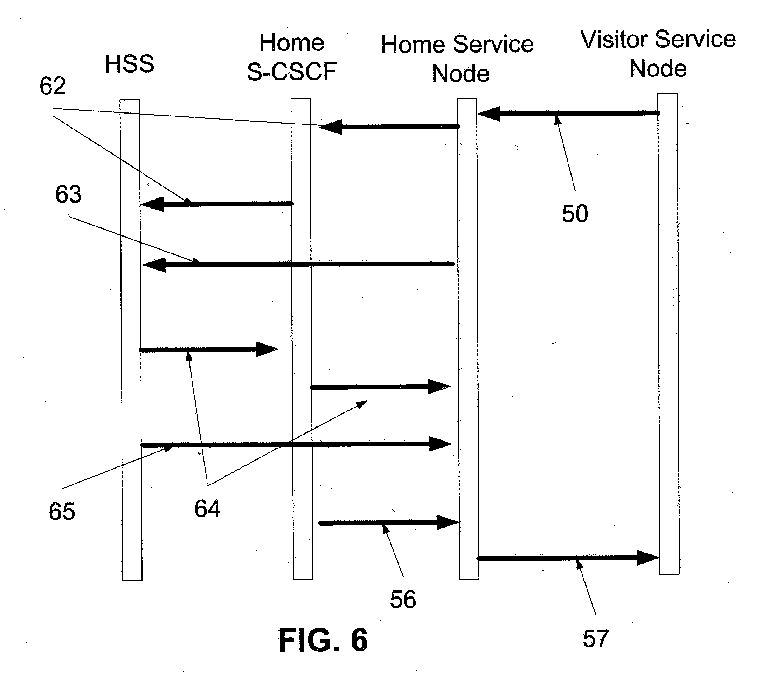

Reference is now made to Fig. 6, which is a sequence chart that depicts the message exchange sequence of a location interrogation process using IMS entities, according to one embodiment of the present invention. The two first steps 50 and 51, and the two last steps 56 and 57 are the same as in Fig. 3, however the other steps are new and relates to networks that integrate IMSs.

After the visitor service node receives a call from the CSCF of the fixed-line network, it establishes a connection with the home service node of the HPLMN. The visitor service node converts the fixed-line network number to the original IMS address, which is a number associated with the home network. As shown at 50, it uses the connection to forward the IMS home address to the home service node. The service node or intelligent gateway queries the HSS, either directly, as shown at 63, or via the S-CSCF, as shown at 62, to find the current roaming profile of the roaming subscriber and identifies visited IP address to which it is connected in order to route the data. Preferably, the visited IP address is a temporary IP address which is assigned for the roamer. The current roaming profile of the roaming subscriber is transmitted from the HSS back to the service node, either directly, as shown at 65, or via the S-CSCF as shown at 64.

Reference in now made, once again, to Fig. 4. In step 104, a telephone connection is established according to related routing information, as noted above. Preferably, the visitor service node of the fixed line network establishes a local connection between the caller and the target mobile handset, based upon the roaming profile and the local IP address or any relevant local information. The roaming profile allows the visitor service node to identify the related IMS sub-system that currently hosts the roaming subscriber.

It is expected that during the life of this patent many relevant devices and systems will be developed and the scope of the terms herein, particularly of the terms roaming, routing, server, mobile handset, and user entity are intended to include all such new technologies *a priori.*

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims. All publications, patents, and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention.

## Claims

1. A visitor service node for managing communication with roaming subscribers, said gateway comprising:
a connection for receiving calls with fixed line numbers from a fixed line network;
a matching module for bringing about a match between a fixed-line number preassigned to a roaming subscriber and a universal identification of said roaming subscriber;
a querying module, associated with said matching module, configured for querying the home network of said roaming subscriber to determine a current roaming location thereof; and
a routing module configured for routing a call designating said fixed-line number to said roaming subscriber according to said current roaming location.

2. The visitor service node of claim 1, wherein said matching module further comprising a roaming subscriber repository having a plurality of fixed-line numbers associated with a plurality of universal identifications, said matching module being configured for querying according to a match between one of said plurality of fixed line numbers and one of said plurality of universal identification.

3. The visitor service node of claim 1, wherein said origin network uses one member of the group consisting of a home location register (HLR) device and a home subscriber server (HSS) for answering said querying.

4. The visitor service node of claim 3, wherein said HLR is configured to identify a remotely located mobile switching center (MSC) that hosts said roaming subscriber.

5. The visitor service node of claim 3, wherein said HSS is configured to identify a remotely IP location that assigned to said roaming subscriber by the roaming network.

6. The visitor service node of claim 4, wherein said current roaming address comprises said remotely located MSC.

7. The visitor service node of claim 1, wherein said current roaming address comprises a mobile station roaming number (MSRN).

8. The visitor service node of claim 1, wherein said call is a voice over IP (VoIP) call.

9. The visitor service node of claim 2, wherein said visitor service node is coupled with a user interface, said user interface being adapted to allow a system operator to configure said plurality of roaming subscriber identification.

10. The visitor service node of claim 2, wherein said home network is coupled with a user interface module, said user interface module being adapted to allow a system operator to configure said plurality of roaming subscriber identification.

11. The visitor service node of claim 1, wherein said call is a member of the group consisting of: a local call, a demand for establishing a connection, a Short Message Service (SMS) transmission, a Multimedia Messaging Service (MMS) transmission, and a General Packet Radio Service (GPRS) session.

12. The visitor service node of claim 1, wherein said visitor service nodes is configured to be connected to a call session control function (CSCF) module.

13. The visitor service node of claim 1, wherein said origin network comprises an Internet protocol (IP) Multimedia Subsystem (IMS).

14. The visitor service node of claim 13, wherein said matching module is configured for assigning a first identification address to a second identification address associated with one of said roaming subscribers, said routing module configured for routing a call designating said first identification address to said roaming subscriber according to said current roaming address.

15. The visitor service node of claim 13, wherein said origin network uses a home subscriber server (HSS) for answering said querying.

16. The visitor service node of claim 13, wherein said first and second identification addresses comprises an Internet protocol (IP) address.

17. The visitor service node of claim 13, wherein said call is established on a connection which is a member of the group consisting of: a telephony connection and an IP connection.

18. The visitor service node of claim 15, wherein said roaming subscriber is connected to said IMS based network using user equipment (UE), said UE being a member of the group consisting of: a landline handset, a cellular handset, a PDA (personal digital assistant), a laptop, and a desktop computer.

19. The visitor service node of claim 1, wherein said visitor service node is configured to establish a local connection with a roaming subscriber by:
receiving a call via said connection, said call being directed to a certain fixed line number allocated by said network for use by roaming subscribers and preassigned to said roaming subscriber, while being a number indicative of said fixed line network;
using said matching module for bringing about a match between said certain fixed-line number and a universal identification of said roaming subscriber,
using said querying module for instructing the home network of said roaming subscriber to locate a mobile network component currently hosting said roaming subscriber, and
using said routing module for routing said call to said roaming subscriber according to said mobile network component.

20. The visitor service node of claim 1, wherein said mobile network component is a mobile switching center.

21. The visitor service node of claim 1, wherein said mobile network component comprises a local IP address allocated by the IMS roaming network hosting the roaming subscriber.

22. A method for managing communication with roaming subscribers, said method comprising:
a) associating a universal identification of said roaming subscriber with a fixed-line number;
b) receiving a call designating said fixed-line number;
c) querying the origin network of said roaming subscriber regarding its current roaming address using said universal identification; and
d) routing said call using said current roaming address.

23. The method of claim 21, further comprising a step before step a) of associating a plurality of universal identifications with a plurality of fixed-line numbers, wherein said querying is done using one of said plurality of universal identifications, said call designating an associated fixed-line number of said plurality of fixed-line numbers.

24. The method of claim 21, wherein said current roaming address comprises the mobile station roaming number (MSRN) of the mobile handset device of said roaming subscriber.

25. The method of claim 21, wherein said querying is done by using a mobile switching center associated with a remotely located service node for sending a location interrogation signal to a mobile switching center which is hosting said roaming subscriber for acquiring said current roaming address.

26. The method of claim 22, wherein said call is one member of the group consisting of: a local call, a demand for establishing a call, a Short Message Service (SMS) transmission, a Multimedia Messaging Service (MMS) transmission, and a General Packet Radio Service (GPRS) session.

27. The method of claim 21, wherein said querying is done by using a CSCF associated with said origin network for querying an HSS of a mobile handset network hosting said roaming subscriber regarding a routing address associated with said roaming subscriber.

28. The method of claim 22, wherein said querying is performed according to match between said fixed-line number and one of a plurality of Mobile Station Integrated Services Digital Network (MSISDN) numbers.

29. The method of claim 22, wherein said call is a voice over IP (VoIP) call.

30. A unit for locating roaming cellular subscribers, comprising:
an input unit configured to be connected to a fixed line network, and to receive a demand to set up a telephony connection with a roaming cellular subscriber according to a fixed-line number, said demand being received from a switch of said fixed line network; and
a locating module, associated with said input unit, configured for locating a cellular network that hosts said roaming subscriber if said demand does not specify which cellular network.

31. A unit for augmenting a fixed line network, said unit comprising:
an assigning module for assigning a fixed-line number of said fixed line network to a roaming cellular subscriber; and
a spotting module for locating a cellular network currently hosting said roaming cellular subscriber, thereby to allow forwarding of calls to said currently hosting cellular network.

32. A unit for facilitating the use of an alias for locating a cellular device, said unit comprising:
an assigning module for assigning a number provided by a fixed line network as said alias to said cellular device; and
a spotting module configured to receive said alias from said fixed line network, therewith to issue a query from which to identify a cellular network currently hosting said cellular device.

33. The unit of claim 31, wherein said query is issued to a home network to which said cellular device is subscribed.

34. A unit for augmenting a fixed line network, said unit comprising:
a batch assigning module for assigning at least one batch of local fixed line numbers to at least one foreign network;
a number assigning module for assigning each one of said batch of local fixed line numbers of a respective foreign network as an alias for a roaming user of said respective foreign network; and
a spotting module configured to recognize said alias as a roaming user and to locate a mobile network currently hosting said roaming user.
